# NEW EUROPEAN PATENT SPECIFICATION

(11) **EP 1 302 434 B2**
(45) Date of publication and mention of the opposition decision: **11.01.2012**
(45) Mention of the grant of the patent: 30.11.2005
(21) Application number: 02023005.8
(22) Date of filing: 15.10.2002
(51) Int. Cl.: B66C 9/04, B62D 7/14, B62D 13/04

(54) **Steering gear of loading and unloading vehicle**
Lenkgetriebe eines Ladefahrzeugs
Méchanisme de direction d'un véhicule de chargement et de déchargement

(30) Priority: 15.10.2001 JP 2001316790
(43) Date of publication of application: 16.04.2003
(73) Proprietor: MITSUBISHI HEAVY INDUSTRIES, LTD., Tokyo 100-8315 (JP)
(72) Inventor: Hashimoto, Hideki, Mitsubishi Heavy Ind., Ltd., Sagamihara-shi, Kanagawa-ken 229-1193 (JP); Kito, Yuji, Mitsubishi Heavy Ind., Ltd., Sagamihara-shi, Kanagawa-ken 229-1193 (JP); Mizunuma, Wataru, Mitsubishi Heavy Ind., Ltd., Sagamihara-shi, Kanagawa-ken 229-1193 (JP)
(74) Representative: HOFFMANN EITLE

(56) References cited:
- EP-A- 0 300 774
- EP-A2- 1 217 220
- DE-C1- 4 328 238
- DE-C2- 10 011 594
- DE-U1- 20 116 564
- US-A- 5 143 400
- US-A- 5 379 220
- US-A1- 2001 020 558
- US-B1- 6 186 266
- US-B1- 6 206 127
- US-B1- 6 371 243

## Description

### BACKGROUND OF THE INVENTION

### Field of the invention

### Description of the Related Art

The present invention relates to a steering gear applied to a rubber-tired platform car mounted with a crane, etc., specifically to that applied to a loading and unloading vehicle having a plurality of axles attached to the underside of the vehicle body frame for supporting, driving, and steering wheels of the vehicle for controlling turning thereof.

### Description of the Related Art

A tire-wheeled mobile harbor crane for performing stevedoring work at a harbor has a heavy crane for handling a heavy object, the crane being mounted on a platform car equipped with a plurality of axles. The crane is transferred freely by the travelling of the platform car driven through the axles.
An active toe adjusting apparatus is known from US 5,143,400, according to which vehicle dynamics measuring devices sense motion or position steering devices measure toe angles. A secondary toe angle correction is actively provided to account for inherent toe angle changes during maneuvers of the vehicle. A steering assembly has an hydraulic actuator for adjustment of the steer angles of the wheels. Control signals from a computer are input to a servo control card and to a servo valve. An optical encoder measures the actual movement of the servo valve mechanism and provides a feedback signal to the servo control card for verification of valve mechanism movement.
US patent 5,379,220 discloses a loading and unloading vehicle being provided with
a plurality of axles under a body frame of said vehicle via supporting arms, the axles constituting steering means for supporting, driving, and steering wheels of the vehicle,
a travelling and turning control being performed by said steering means, and
a steering gear comprising a hydraulic drive device, which is provided for both of right and left wheels to steer the wheels independently for each axle, a controller, which is provided for operating said hydraulic drive device independently, wherein the steering of the wheels supported by each axle is done according to a predetermined travel pattern, and wherein said hydraulic drive device is composed of a hydraulic cylinder provided with a displacement detector to detect the stroke of the hydraulic cylinder, a steering pattern setting means to set a desired steering patternwhich is provided, and said controller controls said hydraulic cylinder of each axle to be operated based on said set value of the steering pattern inputted from said steering pattern setting means and the detected value of the stroke of said hydraulic cylinder inputted from said displacement detector so that the wheels for each axle are steered in correspondence with said travel pattern.

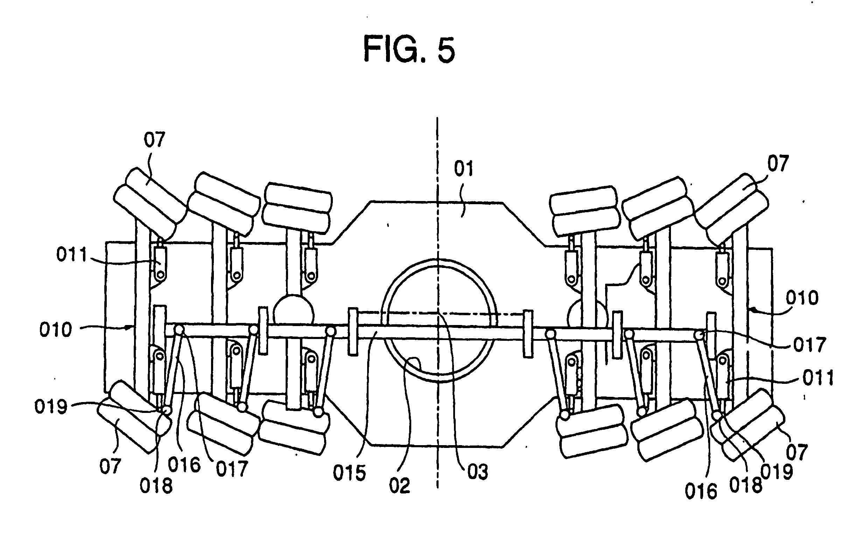

FIG. 5 is a schematic bottom view of a conventional rubber-tired platform car of a mobile harbor crane. In the drawing, reference numeral 1 is the body frame of the platform car, 2 is a supporter for mounting the crane(not shown in the drawing) , the supporter being provided on the center portion of the body frame 1, and 3 shows the rotation axis of the crane.

Reference numeral 7 are right and left wheels, 10 are axles which are to support, drive, and steer said right and left wheels 7. Reference numeral 11 are oil hydraulic cylinders attached to each of said axles for each wheel 7, the output end of each cylinder being connected with each wheel 7.

Reference numeral 15 is a link bar, 16 are connecting links provided on each wheel 7. An end of each connecting link 16 is connected to each of connecting pins 17 located at determined positions on said link bar 15, and the other end is connected to each of connecting pins 18 provided on said wheels 7. The connecting links 16 transmit the reciprocating motion of said link bar 15 to said wheels 7.

Further, said link bar 15 is connected to at least one of said hydraulic cylinder 11 by means of the connecting link 16 and a connecting pin 19 and reciprocated by the hydraulic cylinder 11.

When the link bar 15 is reciprocated, all wheels 7 are steered in synchronization. When turning the platform car, right and left wheels supported by each axle 10 are tilted so that the tilt angle of the front side wheels is larger by a cirtain angle than that of the wheels of the center side axle in the front half side axles and in the rear half side axles the tilt angle of the rear side wheels is larger by a certain angle than that of the wheels of the center side axle.

However, with the platform car for the rubber-tired mobile harbor crane shown in FIG.5, the steering mechanism of each axle 10 is connected with link bar 15, and when the link bar 15 is reciprocated by at least one of the hydraulic cylinder 11, the steering mechanisms of other axles 10 are steered in synchronization, so only one steering pattern is possible and traveling in an oblique line is not possible.

Therefore, when moving the vehicle from the position at some distance from a pier of a harbor to the vicinity of the sea side edge of the pier so that the vehicle is in the position near the sea side edge parallel to the edge line, the vehicle must be, for example, turned to right by steering each wheel as described above to travel near to the sea side edge of the pier, then the vehicle must be turned to left by steering each wheel as described above to position the vehicle parallel to the sea side edge line of the pier. So, the vehicle must be moved by combining two turning modes, i.e. right turning mode and left turning mode.

As described above, the mobile harbor crane with a steering gear of prior art can be steered to travel in two mode, travelling in a straight line and turning, but can not be steered to travel in an oblique line, so the vehicle can not be moved parallel from a position to another position.

Therefore, when moving the vehicle from the position at some distance from a pier of a harbor to the vicinity of the sea side edge of the pier so that the vehicle is positioned parallel to the edge line, the vehicle with a steering gear of prior art can not travel in an oblique line, and work efficiency of loading and unloading by the crane mounted on the vehicle and moved with the vehicle is reduced.

Further, as the connecting links 16 are connected to the link bar 15, there are many moving parts of pin connections, and the maintenance for the prevention of the wear of the moving parts is complicated. In addition, the increase in the number of moving parts necessarily results in increased friction in the steering mechanism, which causes increase in operation power.

### SUMMARY OF THE INVENTION

The present invention was made in light of the problems of the prior art, and the objective of the invention is to provide a loading and unloading vehicle having platform car with a plurality of axles attached to the body frame thereof and to increase the work efficiency of loading and unloading vehicle by improving steering ability and making it possible to travel with a variety of steering modes including the travelling in an oblique line.
The object is solved by a loading and unloading vehicle having the features of claim 1.

It is suitable that an electromagnetic valve is attached to each axle for controlling the stroke of hydraulic cylinders of an axle by controlling the openings of the passages of the working oil thereto, said controller is provided with a target steering calculation means for determining a target steering angle from the set value of the travel pattern inputted from said steering pattern setting means, a stroke deviation calculation means for calculating the deviation between the target stroke of each hydraulic cylinder corresponding to the target steering angle and the detected stroke of each hydraulic cylinder inputted from the displacement detector, and an electromagnetic valve openings adjusting means for calculating the openings of the valve based on the deviation in stroke so that the stroke of each hydraulic cylinder coincides with said target stroke.

According to another embodiment of the invention, when allowing the loading and unloading vehicle to travel in an oblique line, said controller sends a valve openings adjusting signal to said electromagnetic valve attached to each axle to adjust the openings thereof to adjust the stroke of the hydraulic cylinder composing each hydraulic drive device so that the all of the wheels tilt to the same angle.

By the operation, the platform car can travel with all wheels tilted to the same angle, so the car can travel in an oblique line to reach the target position by the shortest travel distance.

When allowing the vehicle to turn, said controller sends a valve openings adjusting signal to said electromagnetic valve to adjust the stroke of each hydraulic cylinder so that the strokes of the hydraulic cylinders of each axle are larger in the hydraulic cylinders of the front side axle than in those of the center side axles of the front half side axles, and are larger in the hydraulic cylinders of the rear side axle than in those of the center side axles of the rear half side axles with tilting directions contrary to those of the front half side axles. By this operation, the vehicle travels in a turning mode with the tilt angle of each wheel different by a certain angle to be turned with a desired turning angle.

When allowing the vehicle to travel in a straight line, said controller sends a valve openings adjusting signal to said electromagnetic valve to adjust the stroke of each hydraulic cylinder so that all of the wheels are directed in a straight line. By this operation, the vehicle can be traveled in a straight line.

Therefore, according to an embodiment of the invention, by providing a hydraulic cylinder to each of right and left wheels supported by each axle so the wheels can be steered independently for each axle, and by operating the right and left hydraulic cylinders of an axle independently per each axle through a controller by means of electromagnetic valves, the steering can be freely controlled by performing coordinated control of each axle without mechanically binding each wheel and without influenced by other axles.

Therefore, the platform car can be traveled in various traveling mode such as an oblique travel mode in addition to a straight travel mode and turning mode, resulting in increased work efficiency of a loading and unloading vehicle equipped with a crane on the platform car.

Further, according to an embodiment of the invention, a hydraulic cylinder is provided for each of right and left wheels to steer the wheels independently per each axle and the hydraulic drive device is operated independently per each axle, the link bar, etc. to link each axle for steering are eliminated, which results in lesser number of linkages, simplified inspection and maintenance of steering mechanism, and decreased moving parts of pin connections where wear and friction occur.

Accordingly, the maintainability of steering mechanism is improved, and the power for operating the steering mechanism is reduced due to decreased friction in the steering mechanism owing to decreased moving parts.

Further, as the strokes of hydraulic cylinders are detected by cylinder stroke detectors and input to a controller, and the hydraulic cylinders of each axle are operated so that each axle is steered in accordance with the set value of the steering pattern through a feedback control on the basis of the detected stroke of the hydraulic cylinder and the target steering angle of each axle corresponding to the steering pattern inputted from the steering pattern input device, the wheels of each axle can be steered to accurately coincide with the target steering pattern,

### BRIEF DESCRIPTION OF THE DRAWINGS

FIG. 1 is a side view of the platform car of a mobile harbor crane according to the present invention.
FIG.2 is a view (bottom view) in the direction of arrow A in FIG. 1
FIG.3 is a side view of the hydraulic cylinder and detector of the stroke thereof.
FIG.4 is a block diagram of steering control of the steering mechanism.
FIG.5 a bottom view of a conventional platform car, corresponding to FIG.2.

### DETAILED DESCRIPTION OF THE PREFERRED EMBODIMENTS

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

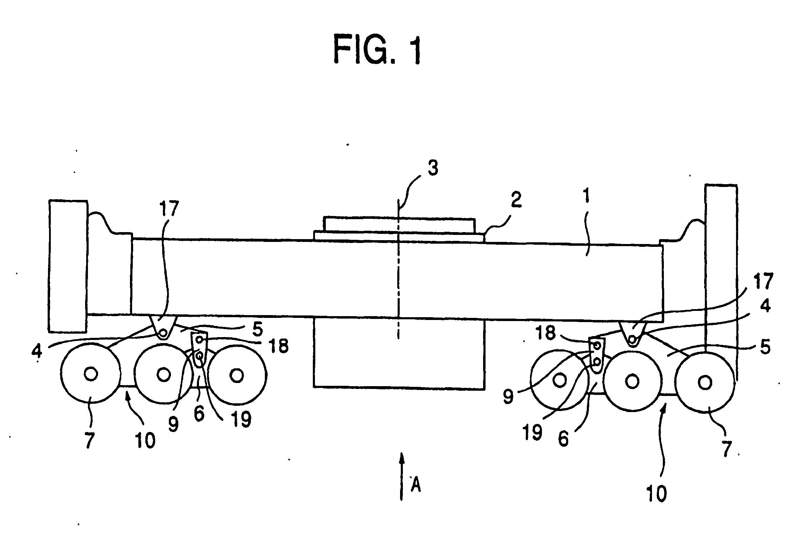

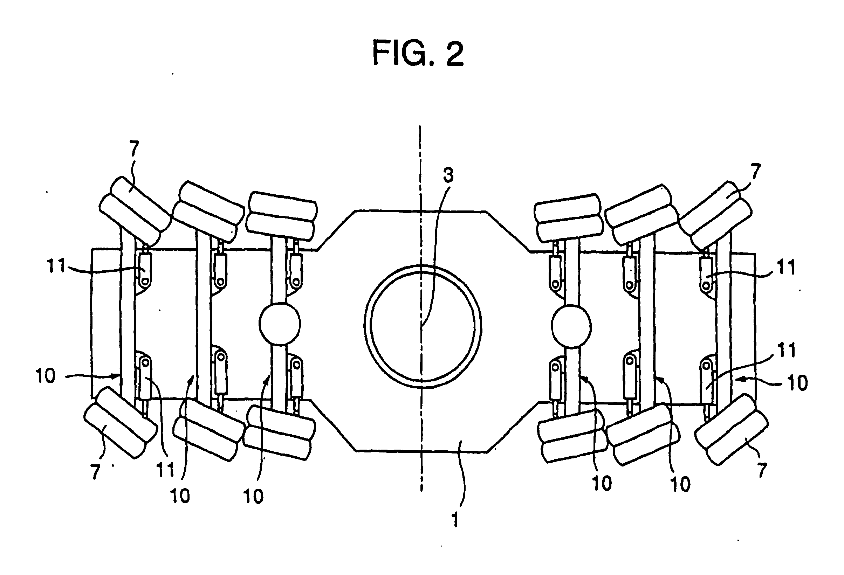

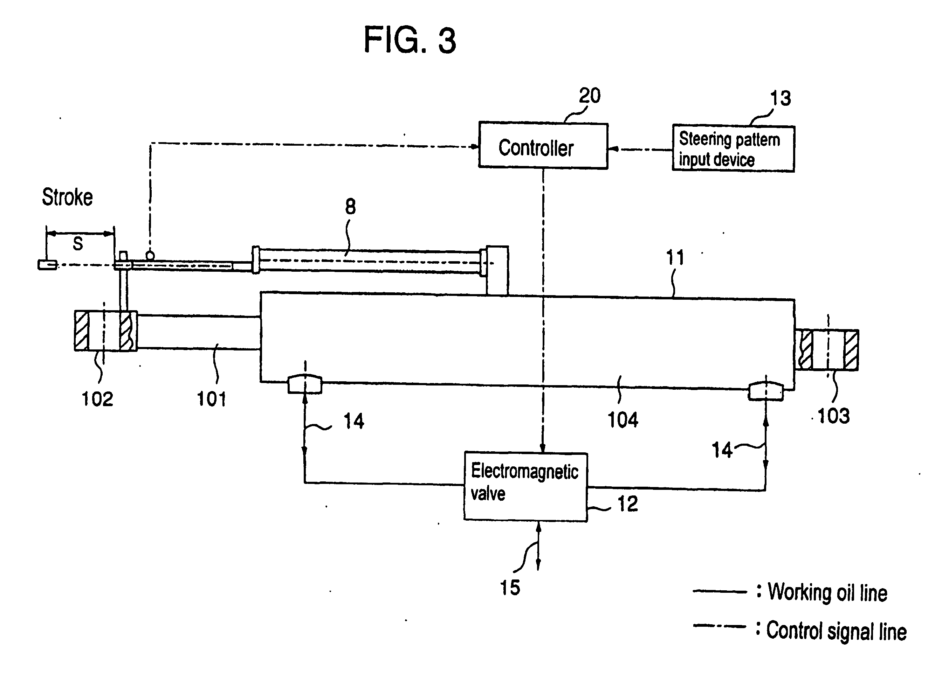

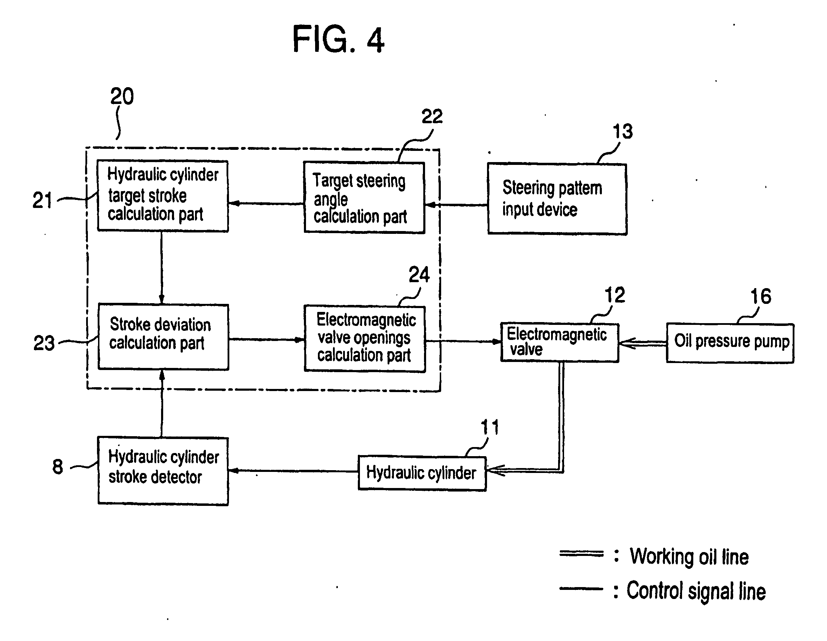

FIG. 1 is a side view of the platform car of a mobile harbor crane according to the present invention, FIG.2 is a view (bottom view) in the direction of arrow A in FIG.1, FIG.3 is a side view of the hydraulic cylinder and detector of the stroke thereof, and FIG.4 is a block diagram of steering control of the steering mechanism.

In FIG.1 and 2 showing the platform car according to the present invention, reference number 1 is a body frame, 2 is a crane supporter provided on the center part of the body frame for mounting a crane(not shown in the drawing), and 3 shows the rotation axis of the crane.

Reference numeral 7 are right and left wheels, 10 are axles which are to support, drive, and steer the wheels and which consist of oil hydraulic cylinders 11 and steering links to connect the hydraulic cylinders to the wheels 7. The hydraulic steering type axle 10 is public known and detailed explanation of its structure is omitted.

Reference numeral 17 are brackets fixed to the underside of said body frame 1 at the front and rear parts. Reference numeral 5 are supporting arms, the center part of each of which is supported for rotation by means of supporting pins 4 at the lower part of said bracket 17 so that the supporting arm 5 can swing parallel to a longitudinal vertical plane, which is a so-called balance-beam structure.

Reference numeral 9 are second brackets, each of which is supported for rotation by means of a supporting pin 18 at an end side of each supporting arms 5. Reference numeral 6 are second supporting arms, the center part of each of which is supported for rotation by means of a supporting pin 19 at the lower part of each second bracket 9 so that the second supporting arm 6 can swing parallel to a longitudinal vertical plane, which similarly constitutes a balance-beam construction.

Forefront wheel 7 and rearmost wheel 7 are supported for rotation at the front end and rear end part of said supporting arms 5 respectively, and other wheels 7 are mounted for rotation to the front and rear end part of said second supporting arms 6 respectively.

This construction of axles 10 and wheels 7 is the same as that of prior art.

In FIG.2, reference numeral 11 are oil hydraulic cylinders attached to said axles 10 per each wheel 7. The hydraulic cylinder 11 is connected to the steering linkage part (not shown in the drawing) of each wheel with the rod 101 side connection end 102, and connected to the steering linkage part (not shown in the drawing) provided on said supporting arm 5 or 6 supporting axles 10 with the cylinder 104 side connection end 103.

Reference numeral 14, 14 are working oil pipes communicating to two oil rooms in said hydraulic cylinder 11 separated by a piston(not shown in the drawing), 12 is a electromagnetic valve provided to the working oil pipes 14, 14. Reference numeral 15 is an inlet pipe for the working oil to enter the electromagnetic valve 12.

Said hydraulic cylinder 11 is a conventional hydraulic cylinder which controls the displacement of the rod 101 connected to the piston(not shown in the drawing ) in the cylinder 104 by the oil pressure introduced into said two oil rooms separated by the piston, and the illustration of its internal structure is omitted.

Said electromagnetic valve 12 is a 3-way valve which switches the communication of an inlet port of the valve 12 to which inlet pipe 15 is connected, to two ports to which said working oil pipes 14, 14 are connected respectively.

Reference number 8 is a cylinder stroke detector consisting of a displacement detector such as potentiometer. It is attached to each of the hydraulic cylinders 11 provided on each axle 10 to detect the stroke S(displacement) of the rod 101. Reference numeral 13 is a steering pattern input device consisting of joystick input device, etc. for setting the traveling mode of the platform car such as travelling in a straight line, turning, travelling in an oblique line, etc.

Reference numeral 20 is a controller to which the detected signal of the rod stroke S of the hydraulic cylinder 11 from the cylinder stroke detector 8 and the set signal of travelling pattern corresponding to travelling mode from said steering pattern input device 13, are input, and computation is executed as described later to determine a control signal to be sent to said electromagnetic valve 12 for controlling the 3-way electromagnetic valve 12.

With this construction of steering gear of the platform car of a mobile harbor crane, the steering of the platform car is done by operating the hydraulic steering type axles 10 having said hydraulic cylinder 11 and steering links. When travelling in a straight line, each wheel 7 is directed in the direction parallel to the platform car.

When travelling in an oblique line, each wheel 7 is tilted to be directed in a direction oblique to the platform car by an angle which is the same for all wheels. When turning, the front side wheels of the front half side wheels are tilted larger than those of center side, and the rear side wheels of the rear half side wheels are tilted larger than those of the center side wheels, the tilt directions of the rear half side wheels being contrary to that of the front half side wheels . As the wheels attached to each axle can be tilted differently per axle as described later, smooth turning is possible.

Next, steering control action in each travelling mode of the platform car will be explained referring to FIG.4.

First, when the traveling mode of the platform car is oblique travel mode, a steering pattern signal corresponding to the oblique travel mode, that is a signal for setting all the wheels to be tilted by the same tilt angle, is input from the steering pattern input device to a target steer angle calculation part 22 on said controller 20.

Target steer angle calculation part 22 determines a target tilt angle of all the wheels 7 based on the input signal of the steering pattern and send the result to a calculation part 21 of a target stroke of the hydraulic cylinders. The target hydraulic cylinder stroke calculation part 21 determines a target stroke of the hydraulic cylinders 11 corresponding to the target tilt angle and send the result to a stroke deviation calculation part 23.

On the other hand, to the stroke deviation calculation part 23 is input the detected signal of the stroke S (displacement) of the hydraulic cylinder 11 sent from said hydraulic cylinder stroke detector 8. The stroke deviation calculation part 23 calculates the deviation of the detected stroke value of said hydraulic cylinder 11 from the determined target stroke value and input the deviation signal to an electromagnetic valve openings calculation part 24.

The electromagnetic valve openings calculation part 24 calculates a correction value of the openings of the electromagnetic valve 12 on the basis of said stroke deviation signal so that stroke deviation is reduced to zero, i.e. said detected stroke value of the hydraulic cylinder 11 is equal to said target stroke value, to correct the openings of the electromagnetic valve 12 by said correction value.

Through the action mentioned above, each electromagnetic valve 12 is adjusted of the openings through which the working oil is supplied to the hydraulic cylinder 11 from an oil pressure pump 16 so that the stroke of the hydraulic cylinder 11 becomes equal to the target stroke.

By this adjustment, the platform car can be traveled in an oblique line with the steering pattern corresponding to the oblique travel pattern set by said steering pattern input device 13.

When the travel mode of the platform car is a turning mode, the steering pattern signal corresponding to the turning mode, that is, the steering pattern signal in which the strokes of the hydraulic cylinders 11 of the axles 10 are larger in the hydraulic cylinders of the front side axle than in those of the center side axle of the front half side axles, and are larger in the hydraulic cylinders of the rear side axle than in those of the center side axle of the rear half side axles with tilting directions contrary to those of the front half side axles, is input to the target steering angle calculation part 22 on the controller 20 from the steering pattern input device 13.

The action following this is similar to the case of oblique travelling. With this turning control operation, the platform car cab be turned with a mode in which the tilt angle of each wheel is different to each other by a certain angle, that is, the car is turned around by the determined turning angle set by said steering pattern input device 13.

When the travel mode of the platform car is a straight travel mode, the steering pattern signal corresponding to the straight travel mode, that is, the steering pattern signal in which the strokes of the hydraulic cylinder 11 of the axles 10 are set so that all of the wheels do not tilt, is input to the target steering angle calculation part 22 on the controller 20 from the steering pattern input device 13.

The action following this is similar to the case of oblique travelling. With this straight travel control operation, the platform car is traveled in a straight line with all the wheels directed in the direction of a straight line.

With the embodiment, a hydraulic cylinder 11 is provided for each of right and left wheels 7 supported by each axle 10 so that each cylinder can be steered independently, and each hydraulic cylinder 11 is operated independently per each axle 10 by the controller 20 by means of said electromagnetic valves 12.

Therefore, the platform car can be traveled in various traveling modes such as an oblique travel mode in addition to a straight travel mode and turning mode, since the steering can be freely controlled by performing coordinated control of each axle 10 without mechanically binding each wheel 7 and without influenced by other axles.

Further, the wheels 7 of each axle 10 can be steered to accurately coincide with the target steering pattern, for the strokes of the hydraulic cylinders 11 are detected by cylinder stroke detectors 8 and input to the controller 20, and the hydraulic cylinder 11 of each axle 10 is operated so that wheels supported by each axle 10 are steered in accordance with the set value of the steering pattern through a feedback control on the basis of the detected stroke of the hydraulic cylinder 11 and the target steering angle of each axle corresponding to the steering pattern inputted from the steering pattern input device 13.

As has been described in the foregoing, according to the present invention, by providing a hydraulic cylinder to each of right and left wheels supported by each axle so that the right and left hydraulic cylinders of each axle can be steered independently per each axle, and by operating the right and left hydraulic cylinders independently per each axle through a controller by means of electromagnetic, the steering can be freely controlled by performing coordinated control of each axle 10 without mechanically binding each wheel and without influenced by other axles.

Therefore, the platform car can be traveled in various traveling modes such as an oblique travel mode in addition to a straight travel mode and turning mode, resulting in increased work efficiency of a loading and unloading vehicle equipped with a crane on the platform car.

Further, as a hydraulic drive device such as hydraulic cylinder is provided for each of right and left wheels to steer the wheels independently per each axle and the hydraulic drive devices are operated independently per each axle through the controller, link bar, etc. to link each axle for steering are eliminated, which results in lesser number of links, simplified inspection and maintenance of steering mechanism, and decreased number of moving parts of pin connections where wear occurs.

Accordingly, the maintainability of steering mechanism is improved, and the power for operating the steering mechanism is reduced due to decreased friction in the steering mechanism owing to decreased moving parts.

Further, according to the present invention, as the strokes of hydraulic cylinders are detected by cylinder stroke detectors and input to a controller, and the hydraulic cylinders of each axle are operated so that the wheels supported by each axle are steered in accordance with the set value of the steering pattern through a feedback control on the basis of the detected stroke of the hydraulic cylinder and the target steering angle of each axle corresponding to the steering pattern inputted from the steering pattern input device, the wheels of each axle can be steered to accurately coincide with the target steering pattern,

## Claims

1. A loading and unloading vehicle being provided with
a plurality of axles (10) under a body frame (1) of said vehicle via supporting arms (5, 6), the axles (10) constituting steering means for supporting, driving, and steering wheels (7) of the vehicle,
a travelling and turning control being performed by said steering means, and
a steering gear comprising a hydraulic drive device, which is provided for each of right and left wheels (7) to steer the wheels (7) independently for each axle (10) and for the wheels of each axle, a controller (20), which is provided for operating said hydraulic drive device independently, wherein the steering of the wheels (7) supported by each axle (10) is done according to a predetermined travel pattern, and wherein said hydraulic drive device is composed of a hydraulic cylinder (11), each of right and left hydraulic cylinders (11) attached to an axle (10) being provided with a displacement detector (8) to detect the stroke of the hydraulic cylinder (11), a steering pattern setting means (13) to set a desired steering patternwhich is provided, and said controller (20) controls said hydraulic cylinders (11) of each axle (10) to be operated based on said set value of the steering pattern inputted from said steering pattern setting means (13) and the detected value of the strokes of said hydraulic cylinders (11) inputted from said displacement detectors (8) so that the wheels (7) for each axle (10) are steered in correspondence with said travel pattern.

2. The loading and unloading vehicle according to claim 1, wherein an electromagnetic valve (12) is attached to each axle (10) for controlling the stroke of hydraulic cylinders (11) of an axle (10) by controlling the openings of the passages (14) of the working oil thereto, said controller (20) is provided with
a target steering calculation means (22) for determining a target steering angle of the wheel (7) from the set value of the travel pattern inputted from said steering pattern setting means (13),
a stroke deviation calculation means (23) for calculating the deviation between the target stroke of each hydraulic cylinder (11) corresponding to the target steering angle and the detected stroke of each hydraulic cylinder (11) inputted from the displacement detector (8), and
an electromagnetic valve openings adjusting means (24) for calculating the openings of the valve based on the deviation in stroke so that the stroke of each hydraulic cylinder (11) coincides with said target stroke.

3. The loading and unloading vehicle according to claim 1, wherein
said hydraulic cylinder (11) is provided for each of right and left wheels (7) to steer the wheels (7) independently for each axle (10), and
said controller (20) is provided for operating said hydraulic cylinders (11) independently so that the steering of the wheels (7) supported by each axle (10) is done according to a predetermined travel pattern; and
when allowing the vehicle to travel in an oblique line, said controller (20) is used to adjust the stroke of the hydraulic cylinder (11) composing each hydraulic drive device so that all of the wheels (7) tilt to the same angle; and
when allowing the vehicle to turn, said controller (20) is used to adjust the stroke of each hydraulic cylinder (11) so that the strokes of the hydraulic cylinders (11) of each axle (10) are larger in the cylinders (11) of the front half side axles (10), and are larger in the cylinders (11) of the rear side axle (10) than in those of the center side axles (10) of the rear half side axles (10) with tilting directions contrary to those of the front half side.

4. The loading and unloading vehicle according to claim 1, wherein the plurality of axles (10) under the body frame (1) of the vehicle are provided on both front and rear sides in the longitudinal direction of the frame (2) on which a crane body is mounted, and the travelling and turning control being performed by hydraulic cylinders (11) attached to each of said axles (10) for right and left wheels (7).

## Patentansprüche

1. Ein Belade- und Entladefahrzeug, bereitgestellt mit
einer Mehrzahl von Achsen (10) unter einem Körperrahmen (1) des Fahrzeuges über Trägerarme (5, 6), wobei die Achsen (10) Lenkmittel darstellen zum Tragen, Antreiben und Lenken von Rädern (7) des Fahrzeuges,
einer Bewegungs- und Wendesteuerung, die durch das Lenkmittel durchgeführt wird, und
einer Lenkung umfassend eine hydraulische Antriebsvorrichtung, die bereitgestellt wird für jedes von rechten und linken Räder (7) zum unabhängigen Lenken der Räder (7) für jede Achse (10) und für die Räder von jeder Achse, eine Steuerung (20), die bereitgestellt wird zum unabhängigen Betreiben der hydraulischen Antriebsvorrichtung, wobei das Lenken der durch jede Achse (10) getragenen Räder (7) gemäß einem vorbestimmten Bewegungsmuster durchgeführt wird, und wobei die hydraulische Antriebsvorrichtung aus einem hydraulischen Zylinder (11) gebildet ist, wobei jeder von rechten und linken Hydraulikzylindern (11), die an einer Achse (10) angebracht sind, mit einem Verschiebungsdetektor (8) bereitgestellt wird zum Erfassen des Hubs des Hydraulikzylinders (11), ein Lenkmustereinstellmittel (13) zum Einstellen eines bereitgestellten gewünschten Lenkmusters, und die Steuerung (20) die Hydraulikzylinder (11) jeder Achse (10) steuert, um betrieben zu werden auf der Grundlage des eingestellten Wertes des von dem Steuerungsmustereinstellmittel (13) eingegebenen Lenkmusters und dem erfassten Wert der Hübe der Hydraulikzylinder (11), der von den Verschiebungsdetektoren (8) eingegeben wird, so dass die Räder (7) für jede Achse (10) gemäß dem Bewegungsmuster gelenkt werden.

2. Belade- und Entladefahrzeug gemäß Anspruch 1, wobei ein elektromagnetisches Ventil (12) an jeder Achse (10) angebracht ist zum Steuern des Hubes von Hydraulikzylindern (11) einer Achse (10) durch Steuern der Öffnungen der Durchlässe (14) des Arbeitsöls dahin, wobei die Steuerung (20) bereitgestellt wird mit
einem Ziellenkberechnungsmittel (22) zum Bestimmen eines Ziellenkwinkels des Rades (7) aus dem eingestellten Wert des Bewegungsmusters, das von dem Lenkmustereinstellmittel (13) eingegeben wird,
einem Hubabweichungsberechnungsmittel (23) zum Berechnen der Abweichung zwischen dem Zielhub jedes Hydraulikzylinders (11) gemäß dem Ziellenkwinkel und dem erfassten Hub jedes Hydraulikzylinders (11), der von dem Verschiebungsdetektor (8) eingegeben wird, und
einem Elektromagnetventilöffnungs-Einstellmittel (24) zum Berechnen der Öffnungen des Ventils auf der Grundlage der Abweichung im Hub, so dass der Hub jedes Hydraulikzylinders (11) mit dem Zielhub übereinstimmt.

3. Belade- und Entladefahrzeug gemäß Anspruch 1, wobei
der Hydraulikzylinder (11) bereitgestellt wird für jedes von rechten und linken Räder (7) zum unabhängigen Lenken der Räder (7) für jede Achse (10), und
die Steuerung (20) bereitgestellt wird zum unabhängigen Betreiben der Hydraulikzylinder (11), so dass die Lenkung der durch jede Achse (10) getragenen Räder (7) gemäß einem vorbestimmten Bewegungsmuster durchgeführt wird; und
wenn dem Fahrzeug erlaubt wird, sich entlang einer schrägen Linie zu bewegen, die Steuerung (20) verwendet wird zum Einstellen des Hubes des Hydraulikzylinders (11), der jede hydraulische Antriebsvorrichtung bildet, so dass alle der Räder (7) den gleichen Winkel einschlagen; und
wenn dem Fahrzeug erlaubt wird zu wenden, die Steuerung (20) verwendet wird zum Einstellen des Hubes jedes Hydraulikzylinders (11), so dass die Hübe der Hydraulikzylinder (11) jeder Achse (10) größer sind in den Zylindern (11) der Achsen (10) der vorderen Halbseiten, und größer sind in den Zylindern (11) der Achsen (10) der Hinterseite, als die der mittleren Achsen (10) der Achsen (10) der hinteren Halbseite beim Eingeschlagen von Richtungen entgegengesetzt zu denen der vorderen Halbseite.

4. Belade- und Entladefahrzeug gemäß Anspruch 1, wobei die Mehrzahl von Achsen (10) unter dem Körperrahmen (1) des Fahrzeuges bereitgestellt werden mit sowohl Vorder- als auch Hinterseiten in der Longitudinalrichtung des Rahmens (2), auf dem ein Krankörper befestigt ist, und die Bewegungs- und Wendesteuerung durchgeführt wird durch Hydraulikzylinder (11), die an jeder der Achsen (10) für rechte und linke Räder (7) angebracht sind.

## Revendications

1. Véhicule de chargement et de déchargement muni d'une pluralité d'essieux (10) sous un châssis de corps (1) dudit véhicule par l'intermédiaire de bras de support (5, 6), les essieux (10) constituant un moyen de direction pour supporter, entraîner et diriger des roues (7) du véhicule,
une commande de déplacement et de virage étant effectuée par ledit moyen de direction, et
un engrenage de direction comprenant un dispositif d'entraînement hydraulique, qui est prévu pour chacune des roues de droite et de gauche (7) pour diriger les roues (7) indépendamment pour chaque essieu (10) et pour les roues de chaque essieu, une unité de commande (20), qui est prévue pour mettre en oeuvre ledit dispositif d'entraînement hydraulique indépendamment, dans lequel la direction des roues (7) supportées par chaque essieu (10) est faite selon un modèle de parcours prédéterminé, et dans lequel ledit dispositif d'entraînement hydraulique est composé d'un vérin hydraulique (11), chacun des vérins hydrauliques de droite et de gauche (11) attachés à un essieu (10) étant muni d'un détecteur de déplacement (8) pour détecter la course du vérin hydraulique (11), un moyen de paramétrage de modèle de direction (13) pour paramétrer un modèle de direction souhaité qui est fourni, et ladite unité de commande (20) commande lesdits vérins hydrauliques (11) de chaque essieu (10) pour être mis en oeuvre en se basant sur ladite valeur paramétrée du modèle de direction entré à partir dudit moyen de paramétrage de modèle de direction (13) et la valeur détectée des courses desdits vérins hydrauliques (11) entrée à partir desdits détecteurs de déplacement (8) de sorte que les roues (7) pour chaque essieu (10) sont dirigées en correspondance avec ledit modèle de parcours.

2. Véhicule de chargement et de déchargement selon la revendication 1, dans lequel une vanne électromagnétique (12) est attachée à chaque essieu (10) pour commander la course des vérins hydrauliques (11) d'un essieu (10) en commandant les ouvertures des passages (14) de l'huile de travail vers ces derniers, ladite unité de commande (20) est munie d'un moyen de calcul de direction cible (22) pour déterminer un angle de direction cible de la roue (7) à partir de la valeur paramétrée du modèle de parcours entrée à partir dudit moyen de paramétrage de modèle de direction (13),
un moyen de calcul d'écart de course (23) pour calculer l'écart entre la course cible de chaque vérin hydraulique (11) correspondant à l'angle de direction cible et la course détectée de chaque vérin hydraulique (11) entrée à partir du détecteur de déplacement (8), et
un moyen de réglage d'ouvertures de vanne électromagnétique (24) pour calculer les ouvertures de la vanne en se basant sur l'écart de course de sorte que la course de chaque vérin hydraulique (11) coïncide avec ladite course cible.

3. Véhicule de chargement et de déchargement selon la revendication 1, dans lequel
ledit vérin hydraulique (11) est prévu pour chacune des roues de droite et de gauche (7) pour diriger les roues (7) indépendamment pour chaque essieu (10), et
ladite unité de commande (20) est prévue pour mettre en oeuvre lesdits vérins hydrauliques (11) indépendamment de sorte que la direction des roues (7) supportées par chaque essieu (10) est faite selon un modèle de parcours prédéterminé ; et
en permettant au véhicule de se déplacer sur une ligne oblique, ladite unité de commande (20) est utilisée pour régler la course du vérin hydraulique (11) composant chaque dispositif d'entraînement hydraulique de sorte que toutes les roues (7) basculent du même angle ; et
en permettant au véhicule de virer, ladite unité de commande (20) est utilisée pour régler la course de chaque vérin hydraulique (11) de sorte que les courses des vérins hydrauliques (11) de chaque essieu (10) sont plus grandes dans les vérins (11) des essieux côté moitié avant (10), et sont plus grandes dans les vérins (11) de l'essieu côté arrière (10) que dans ceux des essieux côté centre (10) des essieux côté moitié arrière (10) avec des sens de basculement contraires à ceux du côté moitié avant.

4. Véhicule de chargement et déchargement selon la revendication 1, dans lequel la pluralité d'essieux (10) sous le châssis de carrosserie (1) du véhicule est prévue des deux côtés avant et arrière dans la direction longitudinale du châssis (2) sur lequel un corps de grue est monté, et la commande de déplacement et de virage étant effectuée par des vérins hydrauliques (11) attachés à chacun desdits essieux (10) pour les roues de droite et de gauche (7).
